# EUROPÄISCHE PATENTSCHRIFT

(11) **EP 0 802 635 B1**
(45) Veröffentlichungstag und Bekanntmachung des Hinweises auf die Patenterteilung: **10.09.2003**
(21) Anmeldenummer: 97104261.9
(22) Anmeldetag: 13.03.1997
(51) Int. Cl.: H03M 13/00, H04N 7/12

(54) **Verfahren zur Übertragung von codierten Daten**
Method of transmitting coded data
Procédé pour la transmission de données codées

(30) Priorität: 15.04.1996 DE 19614701
(43) Veröffentlichungstag der Anmeldung: 22.10.1997
(73) Patentinhaber: ROBERT BOSCH GMBH, 70442 Stuttgart (DE)
(72) Erfinder: Fischer, Ralf, 31199 Diekholzen (DE)

(56) Entgegenhaltungen:
- EP-A- 0 360 424
- DE-A- 19 521 992
- US-A- 5 267 248
- US-A- 5 377 051
- US-A- 5 467 132
- FAZEL K ET AL: "TRANSMISSION OF IMAGES OVER A BURSTY AND RANDOM CHANNELS" PROCEEDINGS OF THE EUROPEAN SIGNAL PROCESSING CONFERENCE,NL,AMSTERDAM, ELSEVIER, Bd. CONF. 5, 18. September 1990 (1990-09-18), Seiten 853-856, XP000365726
- HAGENAUER J: "RATE-COMPATIBLE PUNCTURED CONVOLUTIONAL CODES (RCPC CODES) AND THEIR APPLICATIONS" IEEE TRANSACTIONS ON COMMUNICATIONS,US,IEEE INC. NEW YORK, Bd. 36, Nr. 4, 1. April 1988 (1988-04-01), Seiten 389-400, XP000670428 ISSN: 0090-6778
- FAZEL K ET AL: "APPLICATION OF UNEQUAL ERROR PROTECTION CODES ON COMBINED SOURCE-CHANNEL CODING OF IMAGES" INTERNATIONAL CONFERENCE ON COMMUNICATIONS,US,NEW YORK, IEEE, Bd. -, 15. April 1990 (1990-04-15), Seiten 898-903, XP000145966

## Beschreibung

### Stand der Technik

Das erfindungsgemäße Verfahren geht aus von einem Verfahren zur Übertragung von codierten Daten nach der Gattung des unabhängigen Patentanspruchs. Es wurde bereits ein Übertragungsverfahren von codierten Daten als Videocodierungsstandard von der International Telecommunication Union vorgeschlagen, der für die leitungsgebundene niederratige Übertragung von Videobildern vorgesehen ist. Der Standard hat den Titel "Draft ITU-T Recommendation H.263" und stammt von der Study Group 15, Working Party 15/1, 5. Dezember 1995. In diesem Dokument sind die wesentlichen Informationen zur Quellencodierung der Videosignale, zur Syntax und Semantik bei der Übertragung der Daten, sowie zur Decodierung der Daten im Empfänger enthalten.

Es hat sich aber herausgestellt, daß der Standard für eine Übertragung der Videobilder über fehleranfällige Mobilfunknetze nicht unbedingt geeignet ist, da die Qualität der übertragenen Videobilder aufgrund der vorkommenden Übertragungsfehler nicht ausreichend ist. Zur Lösung dieses Problems werden in der hier vorgestellten Erfindung verschiedene Abwandlungen des bereits bekannten H.263-Standards vorgeschlagen. In der Beschreibung werden Begriffe verwendet, die aus dem bekannten Standard H.263 bekannt sind. Es wird diesbezüglich deshalb nochmals ausdrücklich auf das erwähnte Dokument Bezug genommen.

Aus dem Lehrbuch "Fehlerkorrigierende Blockcodierung für die Datenübertragung" von F. J. Furrer, 1981, Birkhäuser Verlag, Basel sind bereits eine Vielzahl von fehlerkorrigierenden und fehlererkennenden Codierungsverfahren bekannt. Weiterhin ist aus diesem Lehrbuch bekannt, daß bei der paketweisen Übertragung der Beginn jedes Pakets durch ein Synchronisationswort angezeigt wird.

### Vorteile der Erfindung

Das erfindungsgemäße Verfahren nach der Gattung des unabhängigen Patentanspruchs hat dem gegenüber den Vorteil, daß eine Übertragung von Daten auch über stark gestörte Datenkanäle möglich ist. Dabei kann der Aufwand für die Fehlerkorrektur an das Ausmaß der Störungen des Datenkanals angepaßt werden. Es wird so ermöglicht, auch bei wechselnder Stärke der Störung des Datenkanals jeweils die optimale Datenmenge zu übertragen.

Durch die in den Unteransprüchen aufgeführten Maßnahmen sind vorteilhafte Weiterbildungen und Verbesserungen des im unabhängigen Patentanspruch angegebenen Verfahrens möglich. Durch die Übertragung eines Konfigurationsfeldes kann angegeben werden, welches Ausmaß an Redundanz für den Fehlerschutz erforderlich ist. Da das Konfigurationsfeld wichtige Informationen für die weitere Verarbeitung der Daten enthält, wird das Konfigurationsfeld selbst mit einem besonders aufwendigen Fehlerschutz versehen. Wenn die Daten paketweise übertragen werden, wird durch die Verwendung eines Barker- oder Williardworts eine besonders zuverlässige Erkennung des Paketanfangs gewährleistet. Durch eine Rückmeldung über die Qualität des Datenkanals kann das Ausmaß des Fehlerschutzes an die jeweils für den Empfänger der Daten geltende Qualität des Übertragungskanals angepaßt werden. Das erfindungsgemäße Verfahren eignet sich besonders für die Übertragung von Bilddaten, wobei dabei wichtige Informationen besonders gut geschützt werden können. Die für den Bildaufbau besonders wichtigen Informationen können so besonders zuverlässig geschützt werden, so daß auch bei starken Störungen zumindest ein Bild mit verringerter Qualität erzeugt werden kann. Diese Informationen konnen auch bzw. zusätzlich durch eine fehlererkennende Prüfsumme abgesichert werden.

### Zeichnungen

Ausführungsbeispiele der Erfindung sind in den Zeichnungen dargestellt und in der nachfolgenden Beschreibung näher erläutert. Es zeigen Figur 1 einige Einsatzgebiete für das erfindungsgemäße Verfahren, Figur 2 den bereits bekannten Aufbau einer Nachricht nach der Norm H.263, und die Figuren 3 und 4 den Aufbau der erfindungsgemäßen Nachricht.

### Beschreibung

Das erfindungsgemäße Verfahren soll bei der Übertragung von Daten über störanfällige Datenkanäle, insbesondere Bilddaten eingesetzt werden. Als Übertragungskanal ist dabei insbesondere an einen Mobilfunkkanal gedacht. Bei derartigen Kanälen ist die Übertragungsrate sehr stark begrenzt. Die Bildauflösung kann bei solchen Übertragungsraten nicht so groß sein, wie z. B. bei herkömmlichen Fernsehbildern.

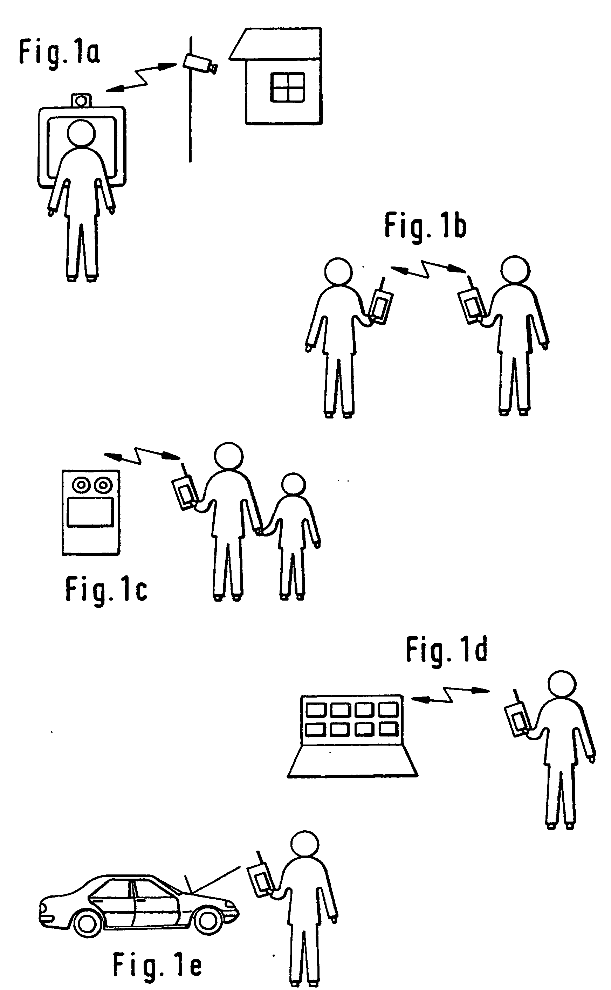

Bild 1 zeigt einige Anwendungen derartiger Bildübertragungen. Figur la zeigt z. B. eine Videoüberwachungsanlage, die zur Absicherung von gefährdeten Gebäuden eingesetzt wird. Figur 1b zeigt als Anwendung die Übertragung von Bilddaten zwischen zwei mobilen Bildtelefonen. Figur 1c zeigt die Anwendung der Personenüberprüfung mit Hilfe eines mobilen Bildtelefons. Figur 1d zeigt die Anwendung der Nachrichtenübertragung zu einem mobilen Bildtelefon. Figur 1e zeigt den Einsatz eines Bildtelefons in einer Kraftfahrzeugwerkstatt zu dem Zweck von Wartungsarbeiten. Hier können von einer zentralen Station Reparaturanleitungen zu einem mobilen Empfangsgerät übermittelt werden. Die beanspruchten Verfahren sind dann jeweils in den Endgeräten (Bildtelefon, Videobildempfänger, Videobildkamera, usw.) realisiert.

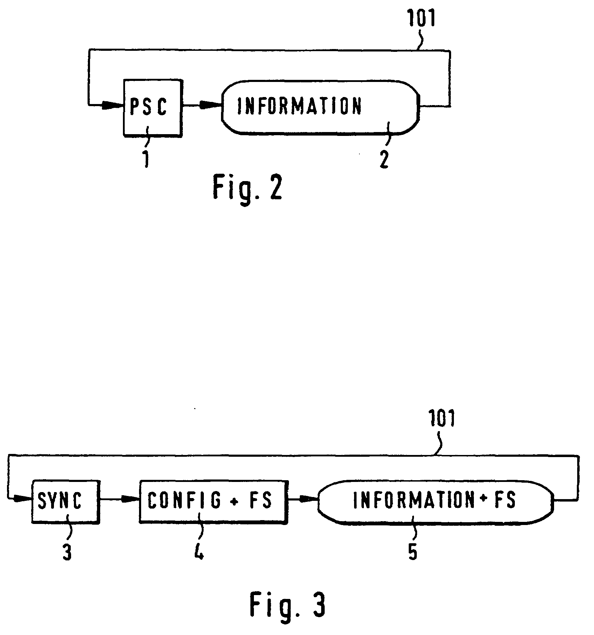

In der Figur 2 ist in allgemeiner Form dargestellt, wie codierte Daten übertragen werden. Die Übertragung der Daten erfolgt durch einen seriellen Datenkanal, d. h. durch ein Medium, welches zur Übermittlung von Signalen geeignet ist. Wie bereits in der Figur 1 erläutert wurde, wird hier insbesondere an die Übertragung von Bilddaten über einen Mobilfunkkanal gedacht. Zu Beginn der seriellen Datenübertragung wird ein erstes Codewort 1 gesandt, welches anzeigt, daß nachfolgend Daten übertragen werden. Dieses Codewort ermöglicht dabei eine Synchronisation des Empfängers, d. h. der Empfänger kann aufgrund des empfangenen Codeworts feststellen, wo die Nachricht beginnt und so den nachfolgenden codierten Datenstrom, der in der Regel aus einzelnen Null- oder Eins-Bitzuständen besteht, interpretieren. Im vorliegenden Fall besteht dieses Codewort 1 aus dem PSC (Picture Start Code) wie er in der H.263 Norm definiert wurde. Nach diesem PSC folgt dann ein Informationsfeld 2 beliebiger Länge, das die für den Bildaufbau notwendigen Daten enthält. Nach der H.263 erfolgt die Übertragung der einzelnen Bilder jeweils in einzelnen Datenpaketen, die jeweils am Anfang einen eigenen PSC aufweisen. In der Figur 2 ist ein einzelnes dieser Datenpakete dargestellt. Durch den Pfeil 101 vom Ende des Informationsfelds 2 zurück zum Beginn des PSC 1 wird dargestellt, daß diese Daten oft wiederholt werden um aufeinanderfolgende Videobilder zu übertragen. In der H.263 wurde dem PSC eine feste Länge zugeordnet. Auch in den folgenden Figuren werden Datenfelder mit fest vereinbarter Länge durch rechteckige Kästchen dargestellt, während Datenfelder mit variabler Länge durch Kästchen mit abgerundeten Ecken dargestellt werden. Das in der Figur 2 dargestellte Verfahren nach der Norm H. 263 geht davon aus, daß die Übertragung der Daten mit hoher Übertragungssicherheit erfolgt. Wenn beispielsweise durch eine Störung der Picture Start Code nicht richtig übertragen wird, so kann der Empfänger das nachfolgende Informationsfeld 2 mit den Bilddaten nicht mehr interpretieren. Es müssen daher Maßnahmen ergriffen werden, die bei einem stark fehlerbehafteten Übertragungskanal wie beispielsweise dem Mobilfunk trotzdem die übertragenen codierten Daten interpretiert werden können. Für derartige fehlerbehaftete Datenkanäle sind fehlerkorrigierende Codierungsverfahren bekannt. Das Prinzip derartiger fehlerkorrigierender Codierungsverfahren besteht darin, daß die Codierung eine gewisse Redundanz vorsieht, so daß ermittelt werden kann, welche Bit fehlerhaft übertragen wurden. Diese Redundanz erfordert natürlich, daß mehr Daten übertragen werden. Je besser dabei die Fehlerkorrektur des verwendeten Codes ist, um so größer ist die benötigte Datenmenge. Da jedoch nicht beliebig viele Daten pro Zeiteinheit übertragen werden können, muß daher ein Kompromiß zwischen der Leistungsfähigkeit des fehlerkorrigierenden Codes und der Übertragungskapazität des Datenkanals gefunden werden.

In der Figur 3 wird nun dargestellt, wie nach dem erfindungsgemäßen Verfahren Daten codiert werden um einen guten Fehlerschutz, d. h. die Verwendung eines fehlerkorrigierenden Codes, und gleichzeitig die Übertragungsrate des Datenkanals einzuhalten. Die in der Figur 3 dargestellten codierten Daten weisen ein Synchronisationsfeld 3, ein Konfigurationsfeld 4 und ein Informationsfeld 5 auf. Im Unterschied zur Figur 2 weist das Informationsfeld 5 einen Fehlerschutz (FS) auf. Durch diesen Fehlerschutz verringert sich die Nutzinformation im Informationsfeld 5. Wenn beispielsweise in der Figur 2 das Informationsfeld 2 ohne Fehlerschutz eine Länge von 100 bit (d.H. 100 bit Nutzinformation) aufweist, so kann das gleichlange Informationsfeld 5 der Figur 3 nur weniger Nutzinformation übertragen, z.Bsp. nur 80 bit. Es wurden somit 20 bit dazu verwendet, um sicherzustellen, daß Übertragungsfehler korrigiert werden können. Je nach dem wie stark die auftretenden Störungen des Übertragungskanals sind, kann es wünschenswert sein, einen stärkeren oder schwächeren Fehlerschutz vorzusehen, d. h. der Anteil der Nutzinformationen im Informationsfeld 5 würde entsprechend kürzer oder länger sein. Zur Codierung können die bekannten Verfahren zur Vorwärts-Fehlerkorrektur verwendet werden, wie beispielsweise der BCH-Code, der REED-Solomon-Code, der RCPC-Code oder andere fehlerkorrigierende Codierverfahren. Eine nicht abschließende Übersicht über fehlerkorrigierende Codierungsverfahren ist beispielsweise aus dem eingangs genannten Lehrbuch von Furrer bekannt. Je nach Ausmaß der Störung des Übertragungskanals wird nun für das Informationsfeld 5 ein starker Fehlerschutz oder ein weniger starker Fehlerschutz verwendet. Um dem Empfänger die Decodierung des Informationsfeldes 5 zu ermöglichen, muß dem Empfänger mitgeteilt werden, durch welches Verfahren die Daten des Informationsfeldes 5 codiert sind und in welchem Ausmaß dabei ein Fehlerschutz eingesetzt wird. Diese Information wird dem Empfänger durch das Konfigurationsfeld 4 zur Verfügung gestellt. Das Konfigurationsfeld 4 enthält somit eine Information über den fehlerkorrigierenden Code des Informationsfeldes 5, beispielsweise wird im Konfigurationsfeld 4 festgehalten, welches Codierungsverfahren verwendet wird und wieviel zusätzliche Bit für den Fehlerschutz aufgewendet werden. Das Konfigurationsfeld enthält somit Steuerdaten die erst die Decodierung der im Informationsfeld enthaltenen Nutzdaten ermöglicht. Da ein Übertragungsfehler im Konfigurationsfeld 4 dazu führen würde, daß die nachfolgenden Informationen nicht interpretiert werden können, ist das Konfigurationsfeld 4 (CONFIG) selbst mit einem besonders starken Fehlerschutz (FS) versehen. Wenn sich der Sender und der Empfänger der Daten bereits über ein Codierungsverfahren verständigt haben, reichen beispielsweise 4 bit um 16 verschiedene Stärken des Fehlerschutzes darzustellen. Um diese 4 bit gut abzusichern, können beispielsweise weitere 10 bit für die Absicherung dieser 4 bit aufgewandt werden um so sicherzustellen, daß das Konfigurationsfeld mit einem besonders starken Fehlerschutz versehen ist.

Statt des aus der Figur 2 bekannten Picture Start Code 1 wird in der Figur 3 ein Synchronisationsfeld 3 (SYNC) verwendet. Dieses Synchronisationsfeld 3 unterscheidet sich vom Picture Start Code der Figur 2 darin, daß es sich hierbei um ein besonders übertragungssicheres Synchronisationssignal handelt, welches mit großer Zuverlässigkeit erkannt werden kann, auch wenn einzelne Bits gestört übertragen werden. Derartige Synchronisationssignale sind als Barker- oder Williardwort bekannt und beispielsweise in dem Buch von Furrer beschrieben. Das in der Figur 3 gezeigte Synchronisationsfeld 3 kann somit besonders zuverlässig erkannt werden. Auch das Synchronisationsfeld enthält somit Steuerdaten die erst eine decodierung der im Informationsfeld enthaltenen Nutzinformationen ermöglicht.

Das erfindungsgemäße Verfahren sieht nun vor, daß in Abhängigkeit von den Störungen auf dem Übertragungskanal ein entsprechender Aufwand zur Absicherung des Informationsfeldes 5 betrieben wird. Da die Übertragungskapazität des Übertragungskanals beschränkt ist, bedeutet nämlich eine starke Absicherung, d. h. ein großer Aufwand für den Fehlerschutz, das entsprechend weniger Informationen (Nutzsignal) übertragen werden können. Bei der Übertragung von Bilddaten bedeutet dies beispielsweise, daß bei stark gestörtem Übertragungssignal nur Daten übertragen werden können, die den Aufbau eines unscharfen Bildes oder eines Bildes mit geringer Farbbrillanz bzw. nur eines Schwarzweißbildes ermöglicht. Bei einem ungestörten Übertragungskanal können hingegen Bilder mit großer Schärfe und größer Farbbrillanz übertragen werden. Das erfindungsgemäße Verfahren sieht somit einen variablen Fehlerschutz vor, der je nach Stärke der Störungen des Übertragungskanals eingestellt wird. Die Stärke des Fehlerschutzes kann bei der Übertragung von Videobildern von Bild zu Bild geändert werden. Um die Stärke des Fehlerschutzes in Abhängigkeit von den Störungen des Übertragungskanals einzustellen, benötigt der Sender der codierten Daten eine Information über das Ausmaß der Störungen des Datenkanals. Diese Information kann dem Sender der codierten Daten beispielsweise vom Empfänger der codierten Daten zur Verfügung gestellt werden, der ja aufgrund der von ihm empfangenen codierten Daten feststellen kann, wieviel Fehler aufgetreten sind, d. h. wie stark der Übertragungskanal gestört ist.

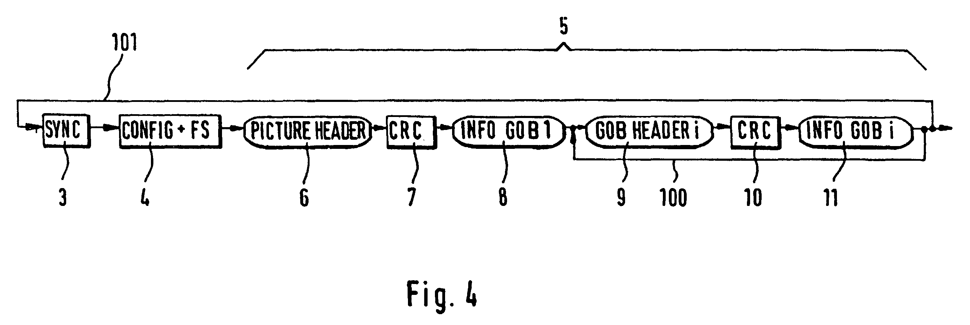

Im Informationsfeld 5 sind nun Daten unterschiedlicher Wichtigkeit enthalten. Bei der Übertragung von Bildern sind dies Teile des Informationsfeldes, die Informationen für eine Vielzahl von Bildpunkten enthalten. Erfindungsgemäß werden diese Teile des Informationsfeldes 5 besonders stark abgesichert. In der Figur 4 wird eine derartige Absicherung anhand des Bitstroms der codierten Daten für ein Bild dargestellt. Das Synchronisationsfeld 3 und das Konfigurationsfeld 4 entsprechen den bereits bekannten Feldern aus der Figur 3. Das eigentliche Informationsfeld 5 ist jedoch in eine Vielzahl von Informations-Unterfeldern 6 bis 11 aufgeteilt, die unterschiedliche Funktionen wahrnehmen. Das erfindungsgemäße Verfahren wird hier anhand einer Bildübertragung nach dem Standard H.263 beschrieben. Prinzipiell kann jedoch das erfindungsgemäße Verfahren auch für andere Arten der Datenübertragung Verwendung finden. Die Informationen für das übertragene Bild werden zunächst in Blöcken und dann in Blockgruppen (GOB = group-of-blocks) zusammengefaßt. Jeder Block enthält eine Vielzahl von Bildpunkten. In der Figur 4 sind diese Informationen der Blockgruppen beispielsweise in den Informationsunterfeldern 8 und 11 dargestellt. Vor den einzelnen Bildinformationen sind sog. Header 6,9 vorgesehen, die Informationen enthalten, die für alle Bildpunkte der Blockgruppen gelten. Diese Header sind in der Figur 4 in den Informations-Unterfeldern 6 und 9 dargestellt. In diesen Headern 6,9 wird dabei beispielsweise festgelegt, mit welcher Schärfe oder Farbbrillanz das Bild übertragen wird. Der erste Header 6 eines Bildes hat dabei eine besondere Funktion, weil bestimmte Informationen, die darin festgelegt werden, für alle in diesem Bild nachfolgenden Informationen gelten. In der Figur 4 wird dieser Header der ersten Blockgruppen mit dem Namen Picture Header 6 versehen, da hier Daten enthalten sind, die für das gesamte Bild gelten. Da eine Störung in diesem Picture Header 6 Folgen für das gesamte Bild hat, wird dieser Picture Header mit einer besonders hohen Datensicherheit übertragen, d. h. es wird hier ein sehr großer Aufwand für die Fehlerkorrektur betrieben. Zusätzlich für die für den Picture Header vorgesehene Fehlerkorrektur wird nach dem Picture Header 6 noch ein Prüffeld 7 übertragen, wobei dieses Prüffeld 7 beispielsweise als CRC-Feld ausgebildet ist. Dieses Prüffeld 7 erlaubt mit relativ geringem Aufwand festzustellen, ob die Daten des Picture Headers richtig übertragen wurden bzw. ob nach der Decodierung und der Fehlerkorrektur nun die richtigen Daten errechnet wurden oder nicht. Das Prüffeld 7 ist dabei nur als fehlererkennender aber nicht als fehlerkorrigierender Code ausgebildet. Der Vorteil derartiger fehlererkennenden Codierungsverfahren ist, daß verhältnismäßig wenig Aufwand getrieben werden muß, um die Fehlerfreiheit der zuvor übermittelten Daten zu bestätigen. Nach dem Prüffeld 7 werden dann die eigentlichen Daten für die erste Blockgruppe mit dem Feld 8 übermittelt. Nach der Übermittlung der Informationen für die erste Blockgruppe 8 (INFO GOB 1) werden dann die Header 9 (GOB Header i), die Prüffelder 10 und die Daten 11 (INFO GOB i) für die weiteren Blockgruppen übertragen. Wie durch den Wiederholungspfeil 100 angedeutet wird, wird dieses Verfahren so oft wiederholt, bis die Informationen von allen Blockgruppen übertragen sind. Durch den Wiederholungspfeil 101 wird angedeutet, daß dieses Verfahren für jedes Bild wiederholt wird. Dabei wird der Header 9 einer jeder Blockgruppe wiederum durch ein Prüffeld 10 abgesichert.

Die Organisation der Daten für die Bildübertragung richtet sich hier nach dem H.263-Standard. Der Picture Header 9 kann beispielsweise aus den H.263-Symbolen TR, PTYPE, PQUANT, CPM, PSBI, TRB, DBQUANT, PEI, PSPARE bestehen. Die GOB-Header 9 für die Blockgruppen bestehen beispielsweise aus den H.263-Symbolen GN, GSBI, GFID, GQUANT. Da sowohl der Picture Header 6 wie auch der GOB Header 9 eine variable Länge aufweist, ist es auch möglich, als CRC-Prüfsumme ausgebildete Prüffelder 7,10 nach einer festen Länge, die größer ist als die maximale Headerlänge einzufügen. Dadurch ergibt sich eine einfachere und weniger störanfällige Struktur. Weiterhin kann das Konfigurationsfeld 4 eine Information darüber enthalten, ob diese zusätzlichen fehlererkennenden Prüffelder verwendet werden oder nicht.

## Patentansprüche

1. Verfahren zur Übertragung von codierten Daten über einen Datenkanal, bei dem Steuerdaten und Nutzdaten übertragen werden, wobei die Steuerdaten Informationen enthalten, die von einem Empfänger der codierten Daten für die Decodierung verwendet werden, wobei die Nutzdaten mit einem fehlerkorrigierenden Code codierbar sind und wobei die Steuerdaten Informationen über den verwendeten fehlerkorrigierenden Code und das Ausmaß des Fehlerschutzes zur empfängerseitigen Auswertung enthalten.

2. Verfahren nach Anspruch 1, **dadurch gekennzeichnet, daß** die über den Datenkanal pro Zeiteinheit übertragbare Menge an Daten begrenzt ist, daß die Steuerdaten ein Konfigurationsfeld enthalten in welchem angegeben wird, wie groß die Redundanz des fehlerkorrigierenden Codes ist.

3. Verfahren nach Anspruch 2, **dadurch gekennzeichnet, daß** das Konfigurationsfeld eine feste Länge aufweist und daß das Konfigurationsfeld mit einem fehlerkorrigierenden Code codiert ist.

4. Verfahren nach einem der vorhergehenden Ansprüche, **dadurch gekennzeichnet, daß** die Übertragung der Daten paketweise erfolgt, daß zu Beginn jedes Blocks ein Synchronisationsfeld übertragen wird, und daß das Synchronisationsfeld als Barker- oder Williardwort ausgebildet ist.

5. Verfahren nach einem der vorhergehenden Ansprüche, **dadurch gekennzeichnet, daß** die Daten von einem Sender zu einem Empfänger gesandt werden, und daß der Sender in Abhängigkeit von der Qualität des Datenkanals den fehlerkorrigierenden Code für die Nutzdaten auswählt.

6. Verfahren nach einem der vorhergehenden Ansprüche, **dadurch gekennzeichnet, daß** die Daten als Bilddaten und der Datenkanal als Mobilfunkdatenkanal ausgebildet ist, und daß die Nutzdaten, die für eine Vielzahl von Bildpunkten verwendet werden, mit einem besonders aufwendigen fehlerkorrigierenden Code codiert sind.

7. Verfahren nach Anspruch 6, **dadurch gekennzeichnet, daß** für die Nutzdaten die für eine Vielzahl von Bildpunkten Verwendung finden, eine fehlererkennende Prüfsumme übertragen wird, durch die nach der Fehlerkorrektur durch den fehlerkorrigierenden Code ermittelt werden kann, ob alle Fehler korrigiert wurden.

8. Verfahren zur Übertragung von codierten Bilddaten über einen Datenkanal, **dadurch gekennzeichnet, daß** für Datenfelder, die Informationen über eine Vielzahl von Bildpunkten enthalten, eine fehlererkennende Prüfsumme übertragen wird.

## Claims

1. Method for the transmission of coded data via a data channel, in which control data and user data are transmitted, with the control data containing information which is used by a receiver of the coded data for decoding, in which case the user data can be coded using an error-correcting code, and in which case the control data contains information about the error-correcting code that is used and about the extent of error protection, for receiver-end evaluation.

2. Method according to Claim 1, **characterized in that** the amount of data which can be transmitted via the data channel per unit time is limited, **in that** the control data contains a configuration field which is used to indicate the extent of the redundancy in the error-correcting code.

3. Method according to Claim 2, **characterized in that** the configuration field has a fixed length, and **in that** the configuration field is coded using an error-correcting code.

4. Method according to one of the preceding claims, **characterized in that** the data is transmitted in packets, **in that** a synchronization field is transmitted at the start of each block, and **in that** the synchronization field is in the form of a Barker or Williard word.

5. Method according to one of the preceding claims, **characterized in that** the data is sent from a transmitter to a receiver, and **in that** the transmitter selects the error-correcting code for the user data as a function of the quality of the data channel.

6. Method according to one of the preceding claims, **characterized in that** the data is in the form of image data, and the data channel is in the form of a mobile radio data channel, and **in that** the user data which is used for a large number of pixels is coded using a particularly complex error-correcting code.

7. Method according to Claim 6, **characterized in that** an error-identifier checksum is transmitted for the user data that is used for a large number of pixels and can be used to determine whether all the errors have been corrected after the error correction process by the error-correcting code.

8. Method for the transmission of coded image data via a data channel, **characterized in that** an error-identifying checksum is transmitted for data fields which contain information about a large number of pixels.

## Revendications

1. Procédé de transmission de données codées via un canal de données, dans lequel des données de contrôle et des données utiles sont transmises ; les données de contrôle contiennent des informations utilisées pour le décodage par un récepteur de données codées ; les données utiles peuvent être codées à l'aide d'un code de correction des erreurs et les données de contrôle contiennent des informations concernant le code de correction des erreurs utilisé et l'importance du dispositif de protection contre les erreurs pour une évaluation côté récepteur.

2. Procédé selon la revendication 1,
**caractérisé en ce que**
la qualité transmissible via le canal de données par unité de temps est limitée aux données et les données de contrôle contiennent un domaine de configuration dans lequel est indiquée l'amplitude de la redondance du code de correction des erreurs.

3. Procédé selon la revendication 2,
**caractérisé en ce que**
le domaine de configuration présente une longueur fixe et ce domaine de configuration est codé à l'aide d'un code de correction des erreurs.

4. Procédé selon l'une des revendications précédentes,
**caractérisé en ce que**
la transmission de données s'effectue par paquets, et au départ, chaque bloc transmet un domaine de synchronisation et le domaine de synchronisation est configuré sous forme de terme Barker ou Williard.

5. Procédé selon l'une des revendications précédentes,
**caractérisé en ce que**
les données sont envoyées d'un émetteur vers un récepteur et l'émetteur sélectionne le code de correction des erreurs pour les données utiles en fonction de la qualité du canal de données.

6. Procédé selon l'une des revendications précédentes,
**caractérisé en ce que**
les données sont configurées sous forme de données d'image et le canal de données sous forme de canal de données de téléphonie mobile et les données utiles, utilisées pour une pluralité de points d'image, sont codées à l'aide d'un code de correction des erreurs particulièrement coûteux.

7. Procédé selon la revendication 6,
**caractérisé en ce que**
pour les données utiles, utilisées pour une pluralité de points d'image, un total de contrôle de détection des erreurs est transmis, par lequel, après correction des erreurs, on peut déterminer si toutes les erreurs ont été corrigées.

8. Procédé de transmission de données d'image codées via un canal de données,
**caractérisé en ce que**
pour les champs de données contenant des informations sur une pluralité de points d'image, un total de contrôle de détection des erreurs est transmis.
